# EUROPEAN PATENT SPECIFICATION

(11) **EP 0 812 382 B1**
(45) Date of publication and mention of the grant of the patent: **13.06.2001**
(21) Application number: 96905098.8
(22) Date of filing: 27.02.1996
(51) Int. Cl.: F01N 3/28

(54) **DEVICE FOR CATALYTIC PURIFICATION OF EXHAUST GASES**
VORRICHTUNG ZUR KATALYTISCHEN ABGASREINIGUNG
DISPOSITIF POUR LA PURIFICATION CATALYSEE DES GAZ D'ECHAPPEMENT

(30) Priority: 01.03.1995 SE 9500748
(43) Date of publication of application: 17.12.1997
(73) Proprietor: AB VOLVO, 405 08 Göteborg (SE)
(72) Inventor: GOTTBERG, Ingemar, S-421 69 Västra Frölunda (SE); WEBER, Kurt, S-442 94 Ytterby (SE)
(74) Representative: Andersson, Per Rune
(86) International application number: PCT/SE96/00247
(87) International publication number: WO 96/27078

(56) References cited:
- EP-A- 0 420 462
- EP-A- 0 483 708
- WO-A-91/10048
- WO-A-94/13938

## Description

### Technical field

The present invention relates to a catalytic exhaust gas purification arrangement according to the preamble of appended claim 1, which is shown in document WO 91/01178.

### State of the art:

Catalytic exhaust gas purifiers are often used in connection with motor vehicles in order to purify the exhaust gases from the vehicle's engine. However, present catalytic converters (catalysers) are not able to operate at full purification efficiency in connection with cold-starting of a vehicle. This problem can be overcome by arranging an additional, electrically-heatable start catalyser in front of the ordinary catalyser. By heating up the start catalyser electrically, the warm-up time for the ordinary catalyser can be shortened, which results in improved purification efficiency during cold starts. Such a catalyser arrangement is known from the patent document WO 89/10470.

A problem which occurs in connection with an electrically-heatable start catalyser is that it requires a powerful electrical supply in order to be activated. This can for example be achieved by arranging an additional battery in the vehicle, which is however unnecessarily expensive and complicated. It is therefore desirable to have a catalyser arrangement which is not dependent on an electrical supply, but which still produces a shortening of the main catalyser's "ignition" time (the so-called "light-off" time), i.e. the time which elapses from starting the engine until the catalyser is working at optimal purification efficiency. This should, in such a case, result in improved purification efficiency of the entire catalyser arrangement.

In connection with conventional catalysers, there is an additional problem in that the incoming exhaust gases impinge directly onto the catalyser. This produces a turbulent flow immediately in front of the catalyser, which leads to inefficient operation of the catalyser as well as a comparatively high back-pressure, which is a disadvantage compounding the reduction in the efficiency of the catalyser. One way of solving this problem is to direct the exhaust gases at an angle to the catalyser, for instance in accordance with the disclosure in the patent document EP 420462. This arrangement however presents a disadvantage in that it has relatively poor flow characteristics, since not only the inlet but also the outlet are angled with respect to the catalyser.

### Summary of the invention:

A main object of the present invention is to solve the aforementioned problems and provide an improved arrangement for catalytic exhaust gas purification, in particular for shortening the light-off time of such an arrangement. This is achieved with an arrangement of the type mentioned in the introduction, the characterising features of which are defined in appended claim 1.

By arranging a relatively small first catalyser upstream of the ordinary catalyser and by letting the exhaust gases be incident at an angle to this first catalyser, an effective purification effect of the entire catalyser arrangement is achieved.

An additional object of the invention is to achieve a correct measurement of the conversion efficiency of the aforementioned catalyser arrangement, in order to provide information for a diagnosis of its operation. This allows an indication, e.g. in the form of a warning light, which warns the vehicle driver that the catalyser is defective and has to be replaced.

### Brief description of the figures:

The invention will now be described in more detail with reference to the accompanying figures, in which
- Fig. 1: is a side view of an arrangement according to a preferred embodiment of the present invention,
- Fig. 2: is a view from above of the arrangement according to Fig. 1,
- Fig. 3: is a cross-sectional view along line A-A in Fig. 2,
- Fig. 4: is an enlarged partial view which shows a portion of the arrangement according to Fig. 1,
- Fig. 5: is a side view of an alternative embodiment of the invention,
- Fig. 6: is a side view of an arrangement which is similar to that in Fig. 1, but which has been provided with lambda sensors for diagnosing the operation of the catalyser arrangement,
- Fig. 7: is a somewhat enlarged view, seen from above, of a further embodiment of the invention, and
- Fig. 8: is a cross-sectional view along the line B-B in Fig. 7.

### Description of preferred embodiments:

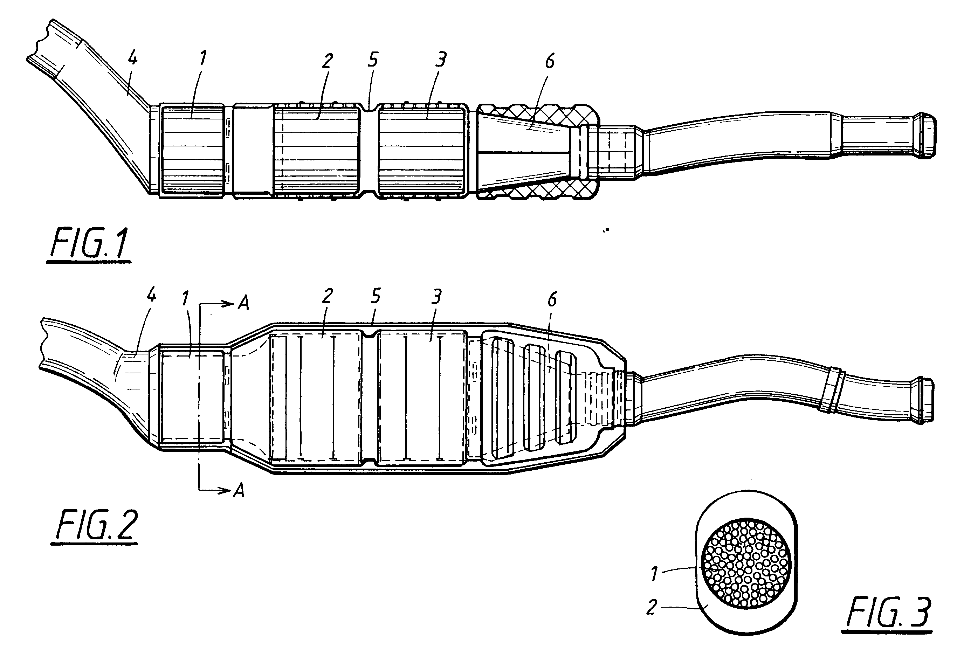

Fig. 1 shows a side view of an arrangement in accordance with the present invention. According to a preferred embodiment, the arrangement comprises a catalytic exhaust gas purifier with a first monolithic catalyser unit 1. Downstream of the first catalyser 1 there is a main catalyser which is constituted by a second monolithic catalyser 2 and a third monolithic catalyser 3.

The first catalyser 1 is preferably constituted by a metallic catalyser which has a circular cross-section with about 98 mm diameter and a length of between 74 and 90 mm, as well as a cell density of the order of 200 cpsi (cells per square inch). A metallic catalyser has the advantage that it has a considerably larger catalytic active area than a ceramic catalyser. Another advantage is that the energy is transported quickly from this to the second catalyser 2. The second catalyser 2 and the third catalyser 3 are preferably constituted by similar ceramic catalysers of the monolithic, three-way catalyser type. Other types of catalysers are also possible. The two catalysers 2, 3 are formed so that their size and cell-density are substantially the same, whilst other parameters such as length and type of catalytic coating can be different.

An inlet channel 4 is arranged upstream of the first catalyser 1. The exhaust gases flow through the inlet channel 4 from a combustion engine of conventional type (not shown). The part of the inlet channel 4 which lies closest to the first catalyser 1 is somewhat widened, which gives an optimal flow of the exhaust gases through the inlet channel 4. The inlet channel 4 presents an angle with respect to the longitudinal direction of the catalysers 1, 2, 3, which lies between 10° - 40°, preferably about 20°. The complete arrangement is enclosed in a common casing 5 of metal. The arrangement also includes an outlet channel 6, through which the exhaust gases flow when they have passed through all of the catalysers 1, 2, 3. The outlet channel 6 is preferably formed as a straight, relatively long conical section. This arrangement is advantageous with respect to the flow characteristics of the exhaust gases at the outlet of the catalyser arrangement.

Fig. 2 shows a view from above of the arrangement according to the invention. From this figure, as well as from figure 3 which is a cross-sectional view along the section A-A in figure 2, it is clear that the second catalyser 2 and the third catalyser 3 have a substantially oval cross-section.

The complete function of the catalyser arrangement will now be described. The first catalyser 1 has a considerably smaller cross-sectional area than the second and third catalysers 2, 3. The ratio between the size of the cross-sectional area of the first catalyser 1 and the second catalyser 2 is between 0.5:3 - 2.9:3, preferably 2:3. The first catalyser 1 also has a relatively small volume. This means that it is heated up relatively quickly due to the heat from the exhaust gases and the heat from the catalytic reaction in the catalyser 1. Thus a catalytic reaction will be started up quickly in the first catalyser 1.

Since the cross-sectional area of the first catalyser 1 is less than the cross-sectional area of the following second catalyser 2, the exothermic heat of the exhaust gas flow out of the first catalyser 1 will be concentrated to a certain portion in the second catalyser 2. This means, in turn, that a particular central part of the second catalyser 2 will be heated up relatively quickly, whereby the catalytic reaction can also start more quickly in the second catalyser 2. The second catalyser 2 is a ceramic catalyser which has a lower thermal conductivity than the first catalyser 1 which is a metallic catalyser. This contributes to an efficient operation of the entire catalyser arrangement.

As can be seen in figures 1 and 2, the inlet channel 4 is angled with respect to the longitudinal axis of symmetry of the first catalyser 1. This means that the cross-sectional area through the inlet channel 4 is less than the cross-sectional area for the frontal surface of the first catalyser 1, onto which the exhaust gases are incident. In this way, a turbulent flow in front of the first catalyser 1 is avoided and instead a laminar flow of the exhaust gases through the inlet channel 4 is obtained up until they reach the first catalyser 1.

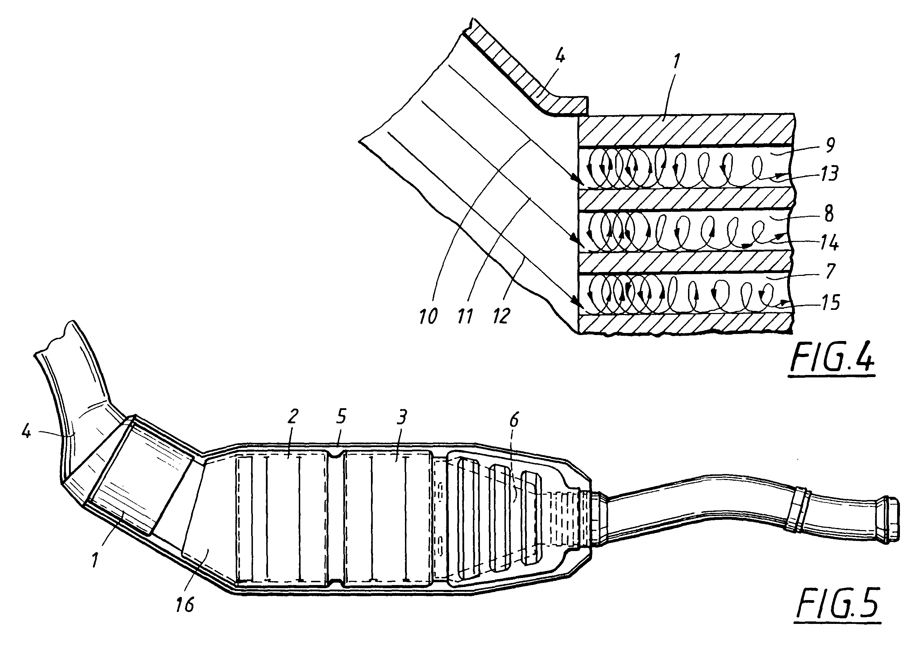

When the flowing exhaust gases reach the first catalyser 1 they will "collide" with the walls in the catalyser 1. This process is shown in figure 4 which is an enlarged partial view of a portion of the inlet channel 4 and the first catalyser 1. The first catalyser 1 is, in a known manner, formed with a number of longitudinal channels, of which three channels 7, 8, 9, are shown in figure 4. According to the embodiment, the channels 7, 8, 9 are substantially straight, i.e. they follow the longitudinal direction of the catalyser 1, but they can also have another form, e.g. a curved shape or a zig-zag shape. The exhaust gas flow is shown schematically with arrows 10, 11, and 12 respectively. The exhaust gas stream/flow, as mentioned above, has a laminar flow through the inlet channel 4. When the exhaust gas flow is incident on the channels 7, 8, 9, the laminar flow effectively goes through a transition to a turbulent flow. This is indicated in figure 4 with "turbulent" flow lines 13, 14 and 15. The transition from laminar to turbulent flow occurs as a result of the inlet channel 4 being angled, both in the height direction and the sideways direction, with respect to the longitudinal direction of the first catalyser 1. The turbulent flow gives rise to a rapid heating of the first catalyser 1, due to which its catalytic reaction can start quickly.

Further downstream in the first catalyser 1, the turbulent flow again goes through a transition to a laminar flow.

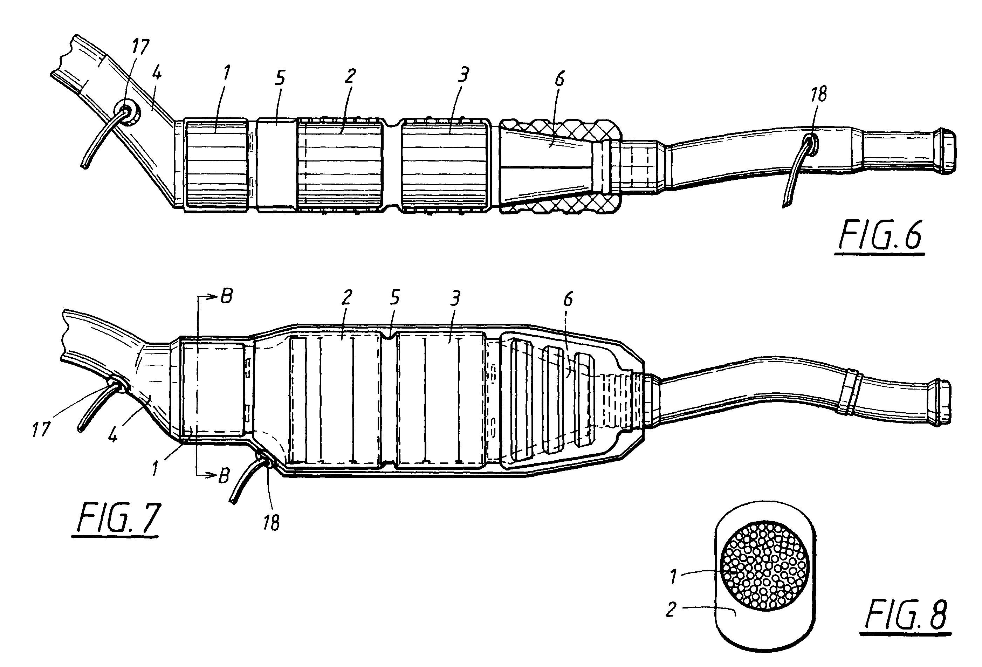

Fig. 5 shows a side view of an alternative embodiment of the invention. As in the aforementioned embodiment, it comprises a comparatively small first catalyser 1 and a main catalyser comprising a second catalyser 2 and a third catalyser 3. Additionally it comprises an inlet channel 4 which is slanted with respect to the first catalyser 1. In this way, a zone having turbulent flow is obtained at the inlet to the first catalyser 1, similar to that which has been described above. This alternative embodiment also comprises a casing 5 with an intermediate portion 16 which is arranged between the first catalyser 1 and the second catalyser 2. The first catalyser 1 is somewhat slanted with respect to the intermediate portion 16, i.e. the longitudinal axis of symmetry of the first catalyser 1 forms an angle to the longitudinal axis of symmetry of the intermediate portion 16. Additionally the intermediate portion 16 is formed so that its longitudinal axis of symmetry forms an angle to the longitudinal axis of symmetry of the second catalyser 2. In this way, a zone with turbulent flow is also formed at the inlet to the second catalyser 2. This assists in giving an increased efficiency of the entire catalyser arrangement by the second catalyser 2 having a shorter light-off time.

Figure 6 is a side view of a further embodiment of the invention which is similar to that shown in Fig. 1 but which further comprises two lambda sensors 17, 18 which can be used for measuring the degree of conversion of the catalyser arrangement. A lambda sensor is a type of sensor which produces an electrical signal which varies with the oxygen content of the exhaust gases. A first lambda sensor 17 is arranged in front of the first catalyser 1 and a second lambda sensor is arranged after the third catalyser 3.

Both of the lambda sensors 17, 18 are also connected to an analyzer unit (not shown) which, on the basis of the signals from the lambda sensors 17, 18, can calculate a value of the degree of conversion of the catalyser arrangement, i.e. its purification ability. In the case that the analysis unit decides that the purification ability of the catalyser arrangement is much too low, an alarm signal can be activated. Such a signal can be constituted by e.g. a warning light on the motor vehicle's instrument panel. The driver of the vehicle can thus be made aware that the catalyser arrangement needs to be replaced.

A special problem can arise if the catalytic active coating of the catalysers has a high oxygen storage capacity, which can sometimes be the case with modern catalysers. This leads to the following problem arising during a diagnosis with the aid of the lambda sensors 17, 18. If the second lambda sensor 18 is placed in the outlet channel 6 (see figure 6), and the catalysers 1, 2, 3 arranged upstream have a high oxygen storage capacity, only a small amount of oxygen will be available at the second lambda sensor 18. This means that the signal from the second lambda sensor 18 becomes unstable and can vary greatly. In the worst case, the signal can be interpreted by the analyzer unit as being a signal indicating a malfunctioning catalyser. In order to solve this problem, the second lambda sensor 18 can be arranged in another place than after the third catalyser 3, e.g. between the first catalyser 1 and the second catalyser 2 or between the second catalyser 2 and the third catalyser 3. In this way, reliable measurements can be obtained.

In the case that it is wished to place the second lambda sensor 18 as close as possible downstream of the first catalyser 1, problems can arise concerning the space which is available in the vehicle. In order to solve this problem, the first catalyser 1 can be arranged somewhat displaced in the sideways direction, i.e. with respect to the symmetrical longitudinal axis of the second catalyser 2. This arrangement is shown in figure 7.

The function of the arrangement is ensured as long as the first catalyser 1 is not displaced further out to the side than that its outlet flow ends up inside the oval cross-section of the second catalyser 2. Figure 8, which shows a cross-section along line B-B in figure 7, defines a possible placement of the first catalyser 1 with respect to the second catalyser 2.

What is stated above concerning the arrangement of the lambda sensors 17, 18, can of course also be applied in connection with the embodiment which is shown in figure 5.

The invention is not limited to the embodiments described above, but can be varied within the scope of the appended claims. For example, different types of catalyser can be used. Moreover the catalysers 1, 2, 3 can have different dimensions and shapes.

The main catalyser can be constituted by a single catalyser instead of the two above-mentioned catalysers 2 and 3. Moreover, the first catalyser 1 can be combined with a so-called HC-trap or an electrically heatable catalyser, e.g. an electrical start-catalyser or a gas burner. In this way, an additional improvement of the purification efficiency can be achieved.

## Claims

1. Arrangement. for catalytic purification of exhaust gases, comprising an inlet channel (4) for supplying exhaust gases to a first catalyser unit (1) and further to a second catalyser unit (2, 3) arranged downstream of the first catalyser unit (1), whereby the cross-sectional area of the first catalyser unit (1) is less than the cross-sectional area of the second catalyser unit (2), **characterized in that** the inlet channel (4) has an extent which is slanted with respect to the longitudinal direction of at least the first catalyser unit (1), so that the exhaust gases are directed at an angle to the first catalyser unit.

2. Arrangement according to claim 1, **characterized in that** the second catalyser unit (2, 3) presents a substantially oval cross-section.

3. Arrangement according to claim 1 or 2, **characterized in that** the first catalyser unit (1) presents a substantially circular cross-section.

4. Arrangement according to any one of the preceding claims, **characterized in that** the ratio between the sizes of the cross-sectional areas of the first catalyser unit (1) and the second catalyser unit (2) is between 0.5:3 - 2.9:3, preferably 2:3.

5. Arrangement according to any one of the preceding claims, **characterized in that** the first catalyser (1) is so arranged that the channels of the catalyser (7, 8, 9) have a longitudinal direction which substantially coincides with the longitudinal direction of the extent of the second catalyser unit (2, 3).

6. Arrangement according to any one of the preceding claims, **characterized in that** a first lambda sensor (17) is arranged upstream of the first catalyser unit (1), and in that a second lambda sensor (18) is arranged downstream of the first catalyser unit (1).

7. Arrangement according to any one of the preceding claims, **characterized in that** said first catalyser unit (1) has an extent, the longitudinal axis of symmetry of which is displaced in the sideways direction with respect to the longitudinal axis of symmetry of the second catalyser unit (2, 3).

8. Arrangement according to any one of the preceding claims, **characterized in that** the inlet channel (4) is slanted at an angle with respect to the longitudinal direction of the catalyser units (1, 2, 3), which lies between 10° - 40°, preferably about 20°.

## Patentansprüche

1. Anordnung zur katalytischen Reinigung von Abgasen, mit einem Einlasskanal (4) für das Zuführen von Abgasen zu einer ersten Katalysatoreinheit (1) und weiter zu einer zweiten Katalysatoreinheit (2, 3), die stromabwärts von der ersten Katalysatoreinheit (1) angeordnet ist, wobei die Querschnittsfläche der ersten Katalysatoreinheit (1) keiner ist als die Querschnittsfläche der zweiten Katalysatoreinheit, dadurch gekennzeichnet, dass der Einlasskanal (4) einen Bereich aufweist, der bezüglich der Längsachse wenigstens der ersten Katalysatoreinheit (1) derart geneigt ist, dass die Abgase unter einem Winkel auf die erste Katalysatoreinheit gerichtet werden.

2. Anordnung nach Anspruch 1, dadurch gekennzeichnet, dass die zweite Katalysatoreinheit (2, 3) einen im wesentlichen ovalen Querschnitt aufweist.

3. Anordnung nach Anspruch 1 und 2, dadurch gekennzeichnet, dass die erste Katalysatoreinheit (1) einen im wesentlichen kreisförmigen Querschnitt aufweist.

4. Anordnung nach einem der vorangehenden Ansprüche, dadurch gekennzeichnet, dass das Verhältnis zwischen den Größen der Querschnittsflächen der ersten Katalysatoreinheit (1) und der zweiten Katalysatoreinheit (2) zwischen 0,5 : 3 - 2.9:3, vorzugsweise 2:3, liegt.

5. Anordnung nach einem der vorangehenden Ansprüche, dadurch gekennzeichnet, dass die erste Katalysatoreinheit (1) derart angeordnet ist, dass die Kanäle (7, 8, 9) des Katalysators eine Längsrichtung aufweisen, die im wesentlichen mit der Längsrichtung des Bereichs der zweiten Katalysatoreinheit (2, 3) zusammenfällt.

6. Anordnung nach einem der vorangehenden Ansprüche, dadurch gekennzeichnet, dass eine erste Lambdasonde (17) stromaufwärts der ersten Katalysatoreinheit (1) angeordnet ist, und dass eine zweite Lambdasonde (18) stromabwärts von der ersten Katalysatoreinheit (1) angeordnet ist.

7. Anordnung nach einem der vorangehenden Ansprüche, dadurch gekennzeichnet, dass die erste Katalysatoreinheit (1) einen Bereich aufweist, dessen Längssymmetrieachse in seitlicher Richtung bezüglich der Längssymmetrieachse der zweiten Katalysatoreinheit (2, 3) verlagert ist.

8. Anordnung nach einem der vorangehenden Ansprüche, dadurch gekennzeichnet, dass der Einlasskanal (4) um einen Winkel bezüglich der Längsachse der Katalysatoreinheiten (1, 2, 3) geneigt ist, der zwischen 10° - 40°, vorzugsweise bei etwa 20°, liegt.

## Revendications

1. Arrangement de purification catalytique de gaz d'échappement, comprenant un canal d'entrée (4) destiné à transmettre des gaz d'échappement à une première unité (1) à catalyseur puis à une seconde unité (2, 3) à catalyseur disposée en aval de la première unité (1) à catalyseur, dans lequel la section de la première unité (1) à catalyseur est inférieure à la section de la seconde unité (2) à catalyseur, caractérisé en ce que le canal d'entrée (4) a un tronçon incliné par rapport à la direction longitudinale de la première unité (1) à catalyseur au moins, si bien que les gaz d'échappement sont dirigés en direction inclinée par rapport à la première unité à catalyseur.

2. Arrangement selon la revendication 1, caractérisé en ce que la seconde unité (2, 3) à catalyseur a une section pratiquement ovale.

3. Arrangement selon la revendication 1 ou 2, caractérisé en ce que la première unité (1) à catalyseur a une section pratiquement circulaire.

4. Arrangement selon l'une quelconque des revendications précédentes, caractérisé en ce que le rapport des dimensions des sections de la première unité (1) à catalyseur et de la seconde unité (2) à catalyseur est compris entre 0,5/3 et 2,9/3 et est de préférence égal à 2/3.

5. Arrangement selon l'une quelconque des revendications précédentes, caractérisé en ce que la première unité (1) à catalyseur est disposée de manière que les canaux du catalyseur (7, 8, 9) aient une direction longitudinale qui coïncide pratiquement avec la direction longitudinale du tronçon de la seconde unité (2, 3) à catalyseur.

6. Arrangement selon l'une quelconque des revendications précédentes, caractérisé en ce que le premier capteur lambda (17) est placé en amont de la première unité (1) à catalyseur, et en ce qu'un second capteur lambda (18) est disposé en aval de la première unité (1) à catalyseur.

7. Arrangement selon l'une quelconque des revendications précédentes, caractérisé en ce que la première unité (1) à catalyseur a un tronçon dont l'axe longitudinal de symétrie est décalé en direction latérale par rapport à l'axe longitudinal de symétrie de la seconde unité (2, 3) à catalyseur.

8. Arrangement selon l'une quelconque des revendications précédentes, caractérisé en ce que le canal d'entrée (4) est incliné d'un certain angle par rapport à la direction longitudinale des unités à catalyseur (1, 2, 3), cet angle étant compris entre 10° et 40° et étant de préférence d'environ 20°.
